Europäisches Patentamt

European Patent Office

Office européen des brevets

(19)

(11) Veröffentlichungsnummer: **0 312 010**

**A2**

(12) **EUROPÄISCHE PATENTANMELDUNG**

(21) Anmeldenummer: 88116932.0

(22) Anmeldetag: 12.10.88

(51) Int. Cl.⁴: **G08G 1/09**

(30) Priorität: 15.10.87 DE 8713877 U
15.10.87 DE 8713878 U
11.04.88 DE 8804737 U

(43) Veröffentlichungstag der Anmeldung:
**19.04.89 Patentblatt 89/16**

(84) Benannte Vertragsstaaten:
**DE ES FR GB IT NL**

(71) Anmelder: **Siemens Aktiengesellschaft Berlin
und München
Wittelsbacherplatz 2
D-8000 München 2(DE)**

(72) Erfinder: **Butenschön, Karl-Heinrich,
Ing.(grad.)
Mittenwalder Strasse 60
D-8038 Gröbenzell(DE)**
Erfinder: **von Tomkewitsch, Romuald,
Dipl.-Ing.
Winklweg, 8
D-8026 Ebenhausen(DE)**

(54) **Sende- und Empfangseinrichtung für die Informationsübertragung mittels Lichtstrahlen.**

(57) Sende- und Empfangseinrichtung für die Informationsübertragung mittels Lichtstrahlen, vorzugsweise im Infrarotbereich, zwischen ortsfesten Baken (IB) und ortsveränderlichen Kraftfahrzeugen (FZ).
In einem gemeinsamen Gehäuse (1) sind Sende- und Empfangsdioden (2,3) auf einer Leiterplatten-Baugruppe (10) mit Strahlrichtung (SS,ES) zu einer lichtdurchlässigen Abdeckscheibe (4) angeordnet. Vor den Empfangsdioden (3) ist ein trichterförmiger Lichteintrittsschacht (8), der im wesentlichen aus zwei gegenüberliegenden Wänden (7,8a,8c) gebildet ist, angeordnet. Neben den Empfangsdioden (3) sind die Sendedioden (2) in einem Bereich, der eine geringere Tiefe aufweist, angeordnet. Erfindungsgemäß ist die Abdeckscheibe (4) zugleich als integrierte Sende- und Empfangsoptik einstückig mit zumindest einer Empfangslinse (6) und mehreren Sendelinsen (5) ausgebildet. Auf der Innenseite des Lichteintrittsschachts (8) sind die untere Wand (8a) lichtabsorbierend und die üblichen Wände (7,8c) lichtreflektierend ausgebildet. Die Sende- und Empfangseinrichtung ist mit der Abdeckscheibe (4) in Fahrtrichtung zu den ortsfesten Baken (IB) im Fahrzeug (FZ) entweder hinter der Windschutzscheibe oder in zumindest einem Außenspiegel (AS) angebracht.

FIG 1

FIG 3

FIG 2

## Sende- und Empfangseinrichtung für die Informationsübertragung mittels Lichtstrahlen.

Die Erfindung bezieht sich auf eine Sende- und Empfangseinrichtung gemäß dem Oberbegriff des Anspruchs 1.

In der DE-OS 36 05 681 ist eine derartige Einrichtung zur Informationsübertragung mittels Infrarotstrahlung beschrieben. Bei einem Dialog zwischen einem Fahrzeugrechner und einem in einer Zentrale angeordneten Großrechner über Sende- und Empfangseinrichtungen des Fahrzeugs sowie ortsfeste Baken werden die Informationsdaten mittels Licht, vorzugsweise Infrarotstrahlung, übertragen. Ein solches Informations-und Leitsystem ist beispielsweise in der DE-PS 29 23 634 oder in der DE-OS 32 48 544 beschrieben. Bei einem derartigen Fahrzeugleitsystem sind beispielsweise die ortsfesten Baken in unmittelbarer Nähe der üblichen Lichtsignalgeber für den Straßenverkehr angeordnet. Das bedeutet, daß die Sende- und Empfangseinrichtung im Fahrzeug über den gleichen Sichtkontakt zur Bake verfügen muß, wie der Fahrzeuglenker zum Lichtsignal. Dieser Sichtkontakt zur Bake für die Infrarotübertragung kann optimal hergestellt werden, wenn die lichtdurchlässige Abdeckscheibe der Sende- und Empfangseinrichtung zu den Baken ausgerichtet ist. Dabei ist es wichtig, daß kein Fremdlicht, insbesondere Sonnenstrahlen, die Übertragungsstrecke beeinflussen und unangenehme Störungen verursachen. Daher wurde in der DE-OS 36 05 681 vorgeschlagen, in einem Lichteintrittsschacht horizontale Blenden mit Absorptionsflächen gegen schrägauffallende Strahlung von oben vorzusehen, um eine verlustarme optische Abschirmung der Empfangsdioden gegen Störbeeinflussung durch die Sonne zu erreichen. Ferner sind in der bekannten Sende- und Empfangseinrichtung im Gehäuseinneren in einem weniger tief ausgelegten Bereich die Sendedioden in mindestens zwei übereinanderliegenden Reihen hinter der Frontwand ohne dazwischenliegende oder sonstige optische Linsen angeordnet. Im hinteren Bereich des tieferen Gehäusebereichs sind Empfangsdioden und davor wurde bisher eine Sammellinse für die einfallenden Lichtstrahlen angeordnet. Dies hat jedoch den Nachteil, daß zwischen der Frontwand bzw. der Abdeckscheibe und den Empfangsdioden eigens die Sammellinse justiert werden muß. Des weiteren erhöht sich der optische Oberflächenverlust, weil die einfallenden Infrarotlichtstrahlen vier Grenzflächen durchdringen müssen. Bei den Sendedioden ist aufgrund einer fehlenden Optik eine Ausrichtung der abgestrahlten Lichtstrahlen nicht vorgesehen. Das hat den Nachteil, daß die Sendedioden auch sehr stark vertikal abstrahlen, so daß die abgestrahlte Lichtenergie nach oben und unten verloren geht, weil sie keinen Beitrag für die Übertragung zu den Baken am Straßenrand bzw. zu den Empfangsdioden der Baken am Lichtsignalgebermast leisten.

Aufgabe der Erfindung ist es daher, die oben geschilderten Nachteile zu vermeiden und eine eingangs beschriebene Sende-und Empfangseinrichtung dahingehend zu verbessern, daß eine verlustarme Datenübertragung zwischen ortsfesten Baken und der Einrichtung im sich bewegenden Fahrzeug (Transceiver) erreicht wird. Dabei soll eine möglichst gute Reduzierung von Störungen durch einfallendes Sonnenlicht erreicht werden.

Diese Aufgabe wird bei einer oben beschriebenen Sende- und Empfangseinrichtung mit den kennzeichnenden Merkmalen des Anspruchs 1 gelöst.

Die Integration der Abdeckscheibe mit der Empfängerlinse und den Sendelinsen als einstückiges Teil hat den Vorteil, daß es als ein Spritzteil hergestellt werden kann. Ein weiterer Vorteil ist dadurch gegeben, daß unnötige optische Oberflächenverluste an den jeweiligen Grenzflächen vermieden werden, weil die lichtdurchlässige Abdeckscheibe und die daran angeformte Linse einstückig ist, so daß maximal zwei zu durchdringende Grenzflächen im Gegensatz zu bisher vier Grenzflächen vorhanden sind. Ferner wird eine Zentrizitätsabweichung durch die mechanischen Aufbautoleranzen der Linsenbefestigungen mit der erfindungsgemäß ausgebildeten Abdeckscheibe vermieden. Darüberhinaus werden hierdurch zusätzliche Abweichungen zwischen Sende- und Empfangslinsen in der Zuordnung zu den Empfangs- und Sendedioden vermieden, insbesondere, wenn an der Innenseite entweder an der Abdeckscheibe oder am Gehäuse zumindest zwei Distanzträger zur Aufnahme der Baugruppen-Leiterplatte angeformt sind. Die erfindungsgemäße Ausgestaltung des Lichteintrittsschachtes verringert die Störungen durch einfallendes Sonnenlicht, was anhand der Unteransprüche noch näher dargelegt wird. Die Sende- und Empfangseinrichtung ist im Fahrzeug, beispielsweise hinter der Frontscheibe, angeordnet.

In einer vorteilhaften Ausgestaltung der Erfindung ist die Abdeckscheibe auf der Außenseite plan und die Innenseite linsenförmig ausgebildet. Das hat den Vorteil, daß die Frontwand der Sende- und Empfangseinrichtung ohne weiteres gereinigt werden kann. Die Empfangsdioden, der Lichteintrittsschacht und die zugeordnete Empfangslinse können neben, d.h. links und/oder rechts von oder über oder unter den Sendedioden bzw. -linsen angeordnet sein.

Zweckmäßigerweise ist die Abdeckscheibe im Bereich der Empfangsdioden als sphärische Linse ausgebildet und im Bereich der Sendedioden als horizontal verlaufende, übereinander angeordnete Zylinderlinsen. Mit der sphärisch ausgebildeten Empfängerlinse wird eine scharfe optische sogenannte Abrißkante erhalten, die zur Minderung der Störeinflüsse von Fremdlicht, z.B. Sonneneinstrahlung von oben, beiträgt. Das von der Bake kommende Licht wird auf die Empfängerdiode nicht als scharfer Brennpunkt bzw. Brennlinie abgebildet, sondern als eine aktive Brennfläche bzw. Brennsteg. Mit der zylindrisch horizontalen Gestaltung der Sendelinsen wird für den Verkehrsraum ein großer horizontaler aber ein sehr kleiner vertikaler Abstrahlwinkel erreicht, so daß das von der Sendediode abgestrahlte Licht gebündelt in dem Bereich austritt, in dem auch die Empfangsdioden der Baken sind. Damit wird auch im Empfangsbereich der Baken eine geringere Störbeeinflussung der Datenübertragung durch die Sonne möglich.

In einer vorteilhaften Ausgestaltung der Erfindung ist jeder Sendediodenreihe, die horizontal verläuft, eine zylinderförmige Linse zugeordnet. Dabei kann es zweckmäßig sein, zusätzlich über die Anzahl der erforderlichen zylinderförmigen Linsen am oberen und unteren Rand der Abdeckscheibe jeweils noch eine zusätzliche Zylinderlinse anzuformen. Dies erhöht die Stabilität der Abdeckscheibe und stellt fertigungstechnisch eine saubere Lösung dar.

Den Eintrittsschacht von Schirmblechen zu bilden und innen auf dem unteren Schirmblech mit einem lichtabsorbierenden Belag zu versehen, und die übrigen Innenflächen der Schirmbleche mit einer lichtreflektierenden Schicht auszubilden, hat den Vorteil, daß vom unteren Schachtboden her keine Rückstrahlung von schräg einfallendem Fremdlicht erfolgt, und daß das einfallende Nutzlicht an den übrigen Flächen auf die Empfangsdioden hinreflektiert wird. Mit der Spiegelung an den konisch relevanten Schirmblechen wird erreicht, daß das flach einfallende Infrarotlicht, das nicht direkt die Empfangsdioden trifft, von den vertikalen Schirmblechen und von dem oberen Schirmblech reflektiert wird und zusätzlich zu den Empfangsdioden gelangt. Ein schräg von oben einfallendes Sonnenlicht wird hingegen durch Mehrfachreflektion optisch blockiert bzw. durch die Absorptionsfläche auf dem unteren Schirmblech unterbrochen. Zusätzlich wird ein Infrarotstreulicht durch die Absorptionsfläche gebremst. Durch die erfindungsgemäße Ausgestaltung des Lichteintrittschachts wird also ein größerer Adaptionswinkel erzielt, weil die Adaptionsfähigkeit der Empfangsdioden über große Einstrahlwinkelbereiche eine direkte Nutzung der Trennlinie der Zylinderlinse über Reflektionen an den die konischen Schachtwände bildenden Schirmblechen oben und unten ermöglicht. Das Fehlen der horizontalen Blenden im Einstrahlungsbereich verursacht in vorteilhafter Weise keine Übertragungsverluste.

Zweckmäßigerweise kann der absorbierende Belag von schwarzem Samt gebildet sein, weil er als Absorptionswerkstoff die bestmögliche optische Absorptionsfläche darstellt. In einer zweckmäßigen Ausgestaltung der Erfindung sind die reflektierenden Innenseiten plattiert, so daß die hochreflektierenden Schirmbleche für die Einspiegelung einen hohen optischen Wirkungsgrad aufweisen. Das hat den Vorteil, daß keine unnötigen Übertragungsverluste der seitlich auf die reflektierenden Schirmbleche auftreffenden aktiven Sendereinstrahlung auftreten. Diese erfindungsgemäße Ausgestaltung des Lichteintrittschachts verhindert eine direkte Einstrahlung der Sonne und damit unerwünschte Störungen, so daß mit einem scharf eingegrenzten Adaptionswinkel eine hohe Trennschärfe erzielt wird.

In einer weiteren vorteilhaften Ausgestaltung der Erfindung ist auf dem unteren Schirmblech der Nahbereich der Empfangsdioden nicht mit einem lichtabsorbierenden Belag versehen. Damit wird erreicht, daß flach von oben einfallendes Infrarotlicht unmittelbar vor dem Bereich der Empfangsdiode noch zu diesem reflektiert wird.

In einer zweckmäßigen Ausgestaltung der Erfindung weist das obere und das untere Schirmblech angeformte Rastnasen auf, die im Frontbereich und im Rückseitenbereich angeordnet sind, und in entsprechende, längs verlaufende Ausnehmungen der vertikalen Schirmbleche verrastbar sind. Das federnde Einrasten des oberen und des unteren Schirmblechs in den vertikalen Schirmblechen erlaubt eine einfache und rasche Montage des trichterförmigen Lichteintrittschachts. Dabei ist es vorteilhaft, daß zumindest das obere Schirmblech im Rückseitenbereich an einer Seite eine gegenüber den anderen Nasen längere Rastnase und das vertikale Schirmblech eine entsprechende längs verlaufende Ausnehmung aufweist. Das hat den Vorteil, daß bei der Montage eine Seitenverwechslung des plattierten Schirmblechs ausgeschlossen werden kann.

In einer Weiterbildung der Erfindung weist das jeweilige vertikale Schirmblech im Frontseitenbereich mehrere Ausnehmungen auf, so daß das obere und das untere Schirmblech in verschiedenen Ausnehmungspaaren verrastbar ist. Das hat den Vorteil, daß die radiale Einstellbarkeit dieser Reflexionsflächen veränderbar ist und dadurch unterschiedliche vertikale Adaptionswinkel des Empfängers erreicht werden können. Zweckmäßigerweise ist an jedem vertikalen Schirmblech zumindest eine Ausnehmung vorgesehen, die nicht in der Fluchtlinie der übrigen, längs verlaufenden Ausnehmungen verläuft. Das hat den Vorteil, daß durch diese kraftschlüssige Verbindung des oberen und des unteren Schirmblechs mit den vertikalen Schirmblechen eine stabile Verrastung erzielt wird und im mobilen Betrieb ein Klappern der Schirmbleche auszuschließen ist.

Da neuerdings in zunehmendem Maße getönte Windschutzscheiben auf den Markt kommen und diese über ein Dämpfungsfilter gegen die Infrarotstrahlung der Sonne verfügen, um die Aufheizung der Fahrzeuge zu mildern, ist in einer Weiterbildung der Erfindung die Sende- und Empfangseinrichtung in das Gehäuse eines im allgemeinen von innen verstellbaren Außenspiegels eingebaut. Derartige Spiegel, die sich immer stärker durchsetzen, verfügen über ein feststehendes Gehäuse. Nur der Spiegel selbst wird innerhalb des Gehäuses verstellt. Ist der Infrarot-Sender/Empfänger fest mit dem Gehäuse verbunden, so behält er seine Ausrichtung bei. Lediglich beim Umklappen des Spiegels bei einem Stoß, das aus Sicherheitsgründen konstruktiv vorgesehen ist, ist die Ausrichtung nicht mehr gegeben. Dies ist jedoch nicht störend, denn im umgeklappten Zustand darf der Fahrer ohnehin nicht fahren. Das stoßartige Umklappen wirkt sich auf die Sende- und Empfangseinrichtung nicht nachteilig aus. Beim Zurückklappen nimmt der Außenspiegel und damit die Sende- und Empfangseinrichtung wieder seine ursprüngliche Position ein.

Besonders vorteilhaft ist es, wenn in einer Weiterbildung der Erfindung die Sende- und Empfangseinrichtung jeweils im rechten und im linken Außenspiegel angeordnet ist. Mit der erfindungsgemäßen Anordnung ist eine Dämpfung der Informationsübertragung durch getönte Windschutzscheiben ausgeschlossen. Außerdem wird durch die zweifache Anordnung die Sicherheit für den Datenaustausch wesentlich erhöht, weil die ortsfesten Baken im allgemeinen links und rechts von der Straße in vorteilhafter Weise unmittelbar am Signalmast der Verkehrssignalanlage angeordnet sind. Dadurch ist die Übertragung auch sichergestellt, wenn beispielsweise der rechte Außenspiegel in seinem Sichtkontakt zur Bake, z.B. durch einen Lastwagen, abgeschirmt ist, oder wenn durch Sonneneinstrahlung der Empfang einer Sende- und Empfangseinrichtung beeinträchtigt ist. Ein diesbezügliches Informationsübertragungssystem ist in der DE-OS 32 48 544 beschrieben.

In einer zweckmäßigen Ausgestaltung der Erfindung kann das feststehende Gehäuse des Außenspiegels aus einem infrarotlichtdurchlässigen Werkstoff mit der integrierten Sende- und Empfangsoptik ausgebildet sein, wobei die Sende- und Empfangsdioden mit der Leiterplatten-Baugruppe direkt hinter der Linseneinheit angeordnet werden können. Dabei können an der Innenseite des Gehäuses die Distanzträger bzw. -stützen zur Aufnahme der Leiterplatten-Baugruppe mit angeformt sein.

Anhand der Zeichnung wird die Erfindung im folgenden erläutert. Dabei zeigen

Fig. 1 eine Sende- und Empfangseinrichtung von oben gesehen, teilweise aufgeschnitten,

Fig. 2 eine Abdeckscheibe von hinten,

Fig. 3 die Abdeckscheibe von der Seite gesehen,

Fig. 4 einen trichterförmigen Lichteintrittsschacht in Seitenansicht,

Fig. 5 einen Schnitt V-V gem. Fig.1,

Fig. 6,7 ein Fahrzeug mit der Sende- und Empfangseinrichtung in den jeweiligen Außenspiegeln und

Fig. 8 eine schematische Darstellung im Schnitt.

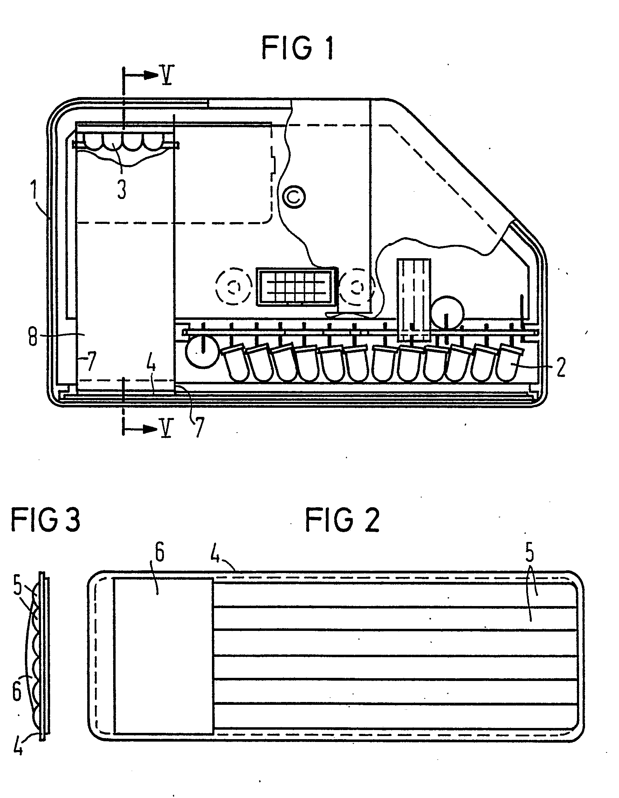

In Fig. 1 ist die Sende- und Empfangseinrichtung von oben gesehen, teilweise aufgerissen gezeigt. Innerhalb des Gehäuses 1 ist im linken, sich weiter nach hinten erstreckenden Bereich das Empfangsteil, im weniger tiefen Bereich sind rechts die Sendedioden 2 angeordnet. Davor befindet sich die Abdeckscheibe 4. Im Empfangsbereich ist der erfindungsgemäß ausgestaltete Lichteintrittsschacht angeordnet, in dessen hinterem Bereich, also im Bereich der Geräterückseite, die Empfangsdioden 3 angeordnet sind. Die zumindest im Empfangsbereich erforderliche Linse entfällt hier.

In Fig.2 und 3 ist die Abdeckscheibe 4 gezeigt. Dabei ist in Fig.2 die Abdeckscheibe von hinten gesehen, so daß deutlich im linken Bereich die Empfangsoptik 6 zu erkennen ist. Diese ist als sphärische Linse ausgebildet und einstückig mit der Abdeckscheibe 4 geformt. Sehr deutlich ist dies in der Seitenansicht der Abdeckscheibe 4 in der Fig.3 zu erkennen. Im Bereich der Sendedioden sind in diesem Ausführungsbeispiel 6 übereinander angeordnete, sich horizontal erstreckende, zylinderförmige Linsen 5 in der Abdeckscheibe 4 integriert. Die Zylinderlinsen 5 bewirken eine breite Abstrahlung im Horizontalwinkel, im Vertikalwinkel hingegen eine sehr schmale Abstrahlung, die beispielsweise nach oben und unten einen Halbwertswinkel von je ca. 3° aufweisen kann. Ohne diese Zylinderlinsen haben übliche Dioden einen Halbwertswinkel von jeweils 11°. Durch die erfindungsgemäße Ausgestaltung wird eine wesentliche bessere Ausbeute der Sendeenergie erreicht.

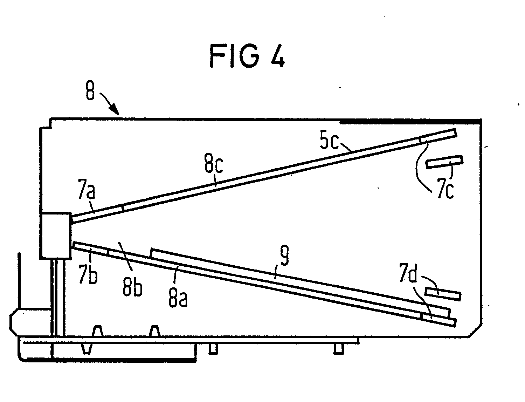

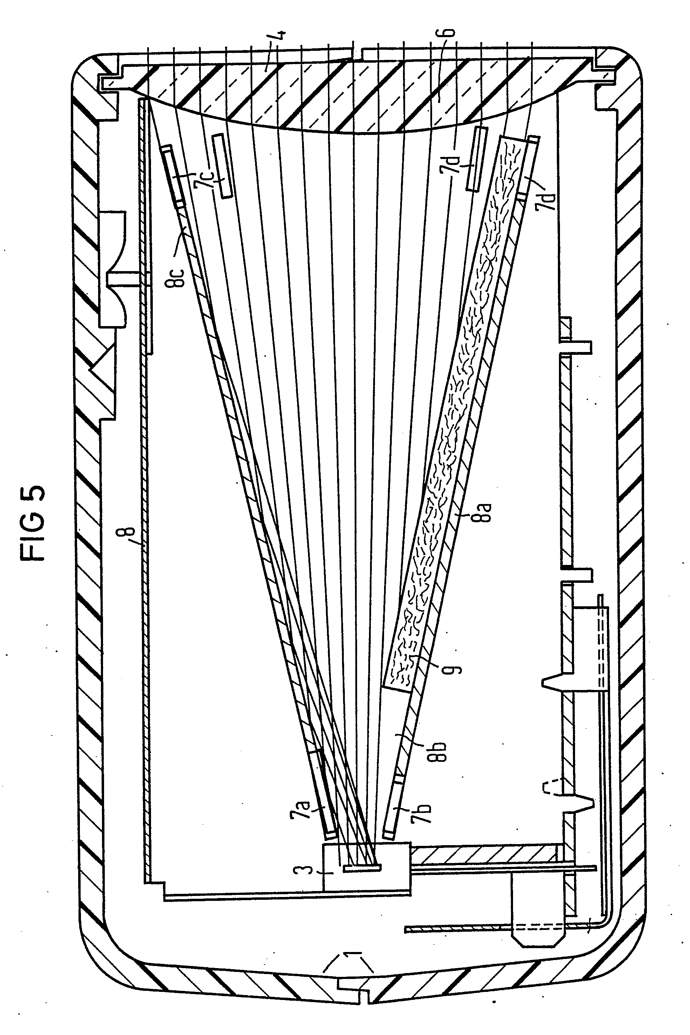

In Fig. 4 ist der Lichteintrittsschacht 8 von der Seite gesehen gezeigt. Die Empfangsdioden 3 sind am Trichterende angeordnet. Die vertikalen Schirmbleche 7 weisen längs verlaufende Ausnehmungen 7a bis 7c auf, in denen das obere 8c- und das untere 8a-Schirmblech mit jeweiligen Nasen verrastbar ist. Im Nahbereich 8b der Empfangsdioden 3 befindet sich auf dem unteren Schirmblech 8a kein lichtabsorbierender Belag. Erst davor erstreckt sich der lichtabsobierende Belag 9, der beispielsweise aus schwarzem Samt sein kann, bis zur Trichteröffnung. Weitere Einzelheiten sind in der Schnittzeichnung in der Fig. 5 ersichtlich.

In der Fig. 5 ist im Schnitt gesehen innerhalb des Gehäuses 1 der trichterförmige Lichteintrittschacht 8 angeordnet, der an seinem Trichterende die Empfangsdioden 3 aufweist. Die Abdeckscheibe 4 weist eine integrierte sphärische Linse 6 auf, die zum Schachtinneren zeigt. Der Schacht ist von zwei vertikalen Schirmblechen 7 und einem oberen Schirmblech 8c und einem unteren Schirmblech 8a gebildet. In den Ausnehmungen 7a bis 7d ist das obere und das untere Schirmblech mit jeweiligen Rastnasen verrastet. Dabei ist die eine Ausnehmung 7a und die entsprechende Rastnase länger ausgebildet als die übrigen, so daß das obere Schirmblech 8c, das auf der Innenseite zur Erzielung einer hohen Reflexion plattiert ist, beim Einbau nicht verwechselt werden kann, d.h. mit der reflektierenden Seite nach oben eingebaut werden kann. Diese längere Ausnehmung 7a ist beispielsweise in dem linken vertikalen Schirmblech eingebracht. Die Ausnehmung 7b ist nicht in der Fluchtlinie der übrigen Ausnehmungen verlaufend, so daß beim Verrasten der Rastnase eine kraftschlüssige Verbindung entsteht. Im Bereich der Frontseite ist ein zusätzliches Ausnehmungspaar 7c und 7b gezeigt, in das das obere und untere Schirmblech eingerastet werden kann, wenn der Öffnungswinkel geringer als hier dargestellt sein soll. Die Innenseite des unteren Schirmblechs 8a weist einen nichtabsorbierenden Belag 9 auf, der sich jedoch nicht unmittelbar bis zu den Empfangsdioden 3 erstreckt. Der Nahbereich 8b kann ebenfalls eine reflektierende Schicht aufweisen, so daß flach einfallende Infrarotstrahlung in diesem Nahbereich noch zu den Empfangs dioden 3 reflektiert werden. In Fig. 5 sind noch eine Reihe von einfallenden Lichtstrahlen eingezeichnet, die entweder direkt zu den Empfangsdioden 3 oder über Reflexion an dem oberen Schirmblech 8c zu den Empfangsdioden 3 gelangen.

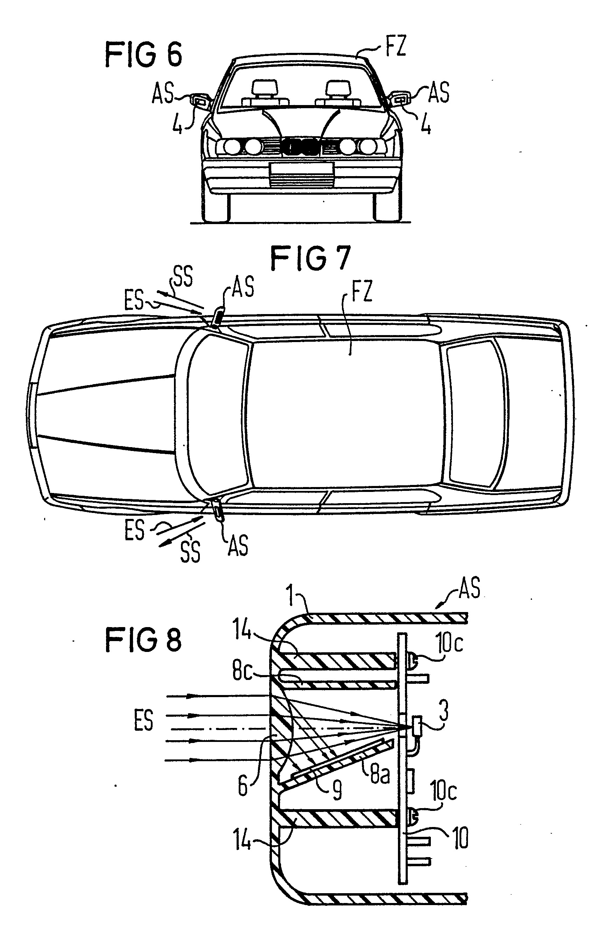

Fig. 6 zeigt ein Fahrzeug FZ in Vorderansicht mit seitlichen Außenspiegeln AS, in die die Sende- und Empfangseinrichtung eingebaut ist und in Fahrtrichtung eine lichtdurchlässige Frontscheibe 4 aufweist.

Fig. 7 zeigt in Draufsicht ein Fahrzeug FZ mit den an den linken und rechten Seitenspiegeln AS angeordneten Sende- und Empfangseinrichtungen. Dabei sind die Infrarot-Sende- und empfangsstrahlungen SS und ES angedeutet.

In Fig. 8 ist das Gehäuse 1 eines Außenspiegels AS schematisch im Schnitt, jedoch ohne den eigentlichen Spiegel, dargestellt. Es ist hier nur eine Prinzipdarstellung gezeigt, die die wesentlichen erfindungsmäßigen Elemente aufzeigen soll.

Im Einzelfall wird das Gehäuse 1 des Außenspiegels AS mit den integrierten Empfangs- und Sendelinsen an das jeweils fahrzeugspezifische Spiegelmodell angepaßt sein. Zumindest an einer Stelle in der Fahrtrichtung ist die Wandung des Gehäuses 1 aus infrarotdurchlässigem Material zu einer Sende- und Empfangslinse ausgeformt. Hier ist nur die Empfangslinse 6 gezeigt. Sie fokkusiert die Infrarotstrahlung ES auf die Empfangsdioden 3, hier nur eine dargestellt. Die Empfangsdioden 3 sowie die hier nicht dargestellten Sendedioden (2) sind auf einer Leiterplatten-Baugruppe 10 angeordnet, die auf entsprechenden Stützen 14 angeschraubt (10c) ist. Dabei können die Stützen bzw. die Distanzträger 14 an dem Gehäuse 1 mit angeformt sein.

In einer Weiterbildung der Erfindung können ebenfalls am Gehäuse 1 angeformte Stege bzw. Wände 8c und 8a als "Schirmbleche" ausgebildet sein und einen Nichteintrittsschacht 8 für die Empfangsdioden 3 bilden. Diese angeformten Stege 8c und 8a sind jedoch nicht infrarotlichtdurchlässig ausgebildet.

Dabei kann der untere Steg 8a mit einem lichtabsorbierenden Material 9 beschichtet sein.

Bezugszeichenliste

1 Gehäuse
2 Sendedioden
3 Empfangsdioden
4 Abdeckscheibe
5 Sendelinsen
6 Empfangslinse
7 vertikale Schirmbleche (Seitenwände)
7a-7d Ausnehmungen
8 Lichteintrittsschacht
8a untere Wand, Bodenblech
8b Nahbereich
8c oberes Schirmblech (obere Wand)
9 lichtabsorbierender Belag (Samt)
10 Leiterplatten-Baugruppe
10c Befestigungsschrauben
14 Distanzträger
FZ Kraftfahrzeug
AS Außenspiegel
SS Sendestrahlung
ES Empfangsstrahlung
IB (Informations-) Bake

**Ansprüche**

1. Sende- und Empfangseinrichtung für die Informationsübertragung mittels Lichtstrahlen, vorzugsweise im Infrarotbereich, zwischen ortsfesten Baken (IB) und ortsveränderlichen Kraftfahrzeugen (FZ), wobei in einem gemeinsamen Gehäuse (1) Sende- und Empfangsdioden (2,3) auf einer Leiterplatten-Baugruppe (10) mit Strahlrichtung (SS,ES) zu einer lichtdurchlässigen Frontwand, die von einer Abdeckscheibe (4) gebildet ist, angeordnet sind, wobei der Bereich vor den Empfangsdioden (3) eine größere Tiefe und einen trichterförmigen Lichteintrittsschacht (8), der im wesentlichen aus zwei gegenüberliegenden Wänden (7,8a,8c) gebildet ist, aufweist, und wobei neben den Empfangsdioden (3) die Sendedioden (2) in einem Bereich, der eine geringere Tiefe aufweist, angeordnet sind,

**dadurch gekennzeichnet,** daß die Abdeckscheibe (4) zugleich als integrierte Sende- und Empfangsoptik einstückig mit zumindest einer Empfangslinse (6) und mehreren Sendelinsen (5) ausgebildet ist, daß auf der Innenseite des Lichteintrittsschacht (8) die untere Wand (8a) lichtabsorbierend und die üblichen Wände (7,8c) lichtreflektierend ausgebildet sind, und daß die Sende- und Empfangseinrichtung mit der Abdeckscheibe (4) in Fahrtrichtung zu den ortsfesten Baken (IB) im Fahrzeug (FZ) angebracht ist.

2. Sende- und Empfangseinrichtung nach Anspruch 1,
**dadurch gekennzeichnet,** daß die Abdeckscheibe (4) auf der Innenseite plan und die Innenseite linsenförmig ausgebildet ist, wobei die Empfangslinse (6) und die Sendelinsen (5) nebeneinander oder übereinander angeordnet sind.

3. Sende- und Empfangseinrichtung nach Anspruch 1 oder 2,
**dadurch gekennzeichnet,** daß die Abdeckscheibe (4) im Bereich der Empfangsdioden (3) eine sphärisch ausgebildete Empfangslinse (6) und im Bereich der Sendedioden (2) horizontal verlaufende, zylinderförmig ausgebildete Sendelinsen (5) aufweist.

4. Sende- und Empfangseinrichtung nach Anspruch 3,
**dadurch gekennzeichnet,** daß den übereinanderliegenden Reihen von Sendedioden (2) jeweils eine zylinderförmige Linse längs einer Sendediodenreihe zugeordnet ist.

5. Sende- und Empfangseinrichtung nach Anspruch 3 oder 4,
**dadurch gekennzeichnet,** daß an der Innenseite entweder an der Abdeckscheibe (4) oder am Gehäuse (1) zumindest zwei Distanzträger (14) zur Aufnahme der Leiterplatten-Baugruppe (10) angeformt sind.

6. Sende- und Empfangseinrichtung nach Anspruch 1,
**dadurch gekennzeichnet,** daß die Wände des Lichteintrittsschachts (8) von Schirmblechen gebildet sind, wobei das lichtabsorbierende Bodenblech (8a) einen absorbierenden Belag (9), z.B. schwarzen Samt, aufweist und die reflektierenden Schirmbleche auf den Innenseiten plattiert sind.

7. Sende- und Empfangseinrichtung nach Anspruch 6,
**dadurch gekennzeichnet,** daß sich der absorbierende Belag (9) bis dicht an die Frontseite (4), jedoch nicht bis in den Nahbereich (8b) der Empfangsdioden (3), erstreckt.

8. Sende- und Empfangseinrichtung nach Anspruch 6,
**dadurch gekennzeichnet,** daß das obere und das untere Schirmblech (8c,8a) mit angeformten Nasen, die im Front- und im Rückseitenbereich angeordnet sind, in zugehörige Ausnehmungen (7a bis 7b) der vertikalen Schirmbleche (7) verrastbar sind.

9. Sende- und Empfangseinrichtung nach Anspruch 8,
**dadurch gekennzeichnet,** daß zumindest das obere Schirmblech (8c) im Rückseitenbereich an einer Seite eine längere Rastnase und das vertikale Schirmblech (7) eine entsprechende, längs verlaufende Ausnehmung (7a) aufweist.

10. Sende- und Empfangseinrichtung nach Anspruch 8,
**dadurch gekennzeichnet,** daß die vertikalen Schirmbleche (7) im Frontseitenbereich mehrere Ausnehmungspaare (7c und 7d) aufweisen.

11. Sende- und Empfangseinrichtung nach Anspruch 8,
**dadurch gekennzeichnet,** daß jedes vertikale Schirmblech (7) zumindest eine Ausnehmung (7b) aufweist, die nicht in der Fluchtlinie der längs verlaufenden Ausnehmungen verläuft.

12. Sende- und Empfangseinrichtung nach einem der vorhergehenden Ansprüche, **dadurch gekennzeichnet,**
daß sie hinter der Windschutzscheibe vor dem Innenspiegel angeordnet ist.

13. Sende- und Empfangseinrichtung nach einem der Ansprüche 1 bis 11, **dadurch gekennzeichnet,**
daß sie in zumindest einem seitlichen Außenspiegel (AS) des Fahrzeugs (FZ) angeordnet ist, und daß das feststehende Gehäuse (1) des Außenspiegels (AS) zugleich das Gehäuse (1) für die Sende- und Empfangseinrichtung bildet.

14. Sende- und Empfangseinrichtung nach Anspruch 13,
**dadurch gekennzeichnet,** daß sie jeweils im rechten und im linken Außenspiegel (AS) angeordnet ist.

15. Sende- und Empfangseinrichtung nach Anspruch 13 oder 14,
**dadurch gekennzeichnet,** daß das feststehende Gehäuse (1) des Außenspiegels (AS) aus infrarotlichtdurchlässigem Werkstoff mit integrierter Sende- und Empfangsoptik (5,6) ausgebildet ist, und daß dahinter die zugeordneten Sende- und Empfangsdioden (2,3) auf der Leiterplatten-Baugruppe (10) angebracht sind, wobei die Leiterplatte auf den angeformten Distanzträger (14) befestigt ist.

16. Sende- und Empfangseinrichtung nach einem der vorhergehenden Ansprüche, **dadurch gekennzeichnet,**

daß an der Innenseite des Gehäuses (1) ein oberer und ein unterer Steg (8c,8a) angeformt sind, die lichtundurchlässig und als Lichteintrittsschacht (8) ausgebildet sind.

# FIG 1

V →

1

3

8

7

7

4

V →

2

# FIG 3

5

6

6

4

# FIG 2

6

4

5

5

FIG 4

FIG 5

FIG 6

FIG 7

FIG 8